# EUROPEAN PATENT APPLICATION

(11) **EP 1 345 129 A2**
(43) Date of publication of application: **17.09.2003**
(21) Application number: 03004885.4
(22) Date of filing: 06.03.2003
(51) Int. Cl.: G06F 17/21

(54) **Information processing system and method**

(30) Priority: 07.03.2002 JP 2002062151
(71) Applicant: Kabushiki Kaisha Toshiba, Tokyo 105-8001 (JP)
(72) Inventor: Nagao, Yohei, Intellectual Property Division, Minato-ku, Tokyo (JP)
(74) Representative: HOFFMANN - EITLE

(57) **Abstract**

An information processing system between a revision management tool and an editor, the information processing system, including: a management table storage retaining a management table holding the location information of a file, an object in the file, and either a keyword or link information to the object body, the keyword being a letter string uniquely determined for each of the objects; and a reference relation creation module passing to the editor either the keyword or the link information, the keyword and the link information being to be embedded into the file by the editor.

## Description

### CROSS REFERENCE TO RELATED APPLICATIONS

This application is based upon and claims the benefit of priority from prior Japanese Patent Application P2002-62151, filed on March 7, 2002; the entire contents of which are incorporated by reference herein.

### BACKGROUND OF THE INVENTION

### 1. Field of the Invention

The present invention relates to an information processing system, an information processing method, and an information processing program, which process and manage a file acquired from a tool (hereinafter, referred to as a "revision management tool") in cooperation with the tool, the tool managing the change history of a program source file, a text file, or the like.

### 2. Description of the Related Art

When the development and evaluation of a software program are carried out, several revisions are created for one program in accordance with the development level. At this time, the same file is given to the same files even if the revisions are different. Therefore, the revision management tool is used to manage the file with a retention record.

However, when file processing is performed on an editor or a personal computer (PC), in some cases, a plurality of files that have the same name but different revisions are acquired from the revision management tool. In such processing, since the plurality of files of the same name exist on the editor or the personal computer (PC), the file which is a target to edit or build is easily mistaken, and there is a possibility of damage to the reliability of the program product to be released.

For example, a plurality of files constituting one software program is registered with the revision management tool, and a software developer is editing a file of the latest revision in a development stage. In such a situation, when a bug is found in a file previously released and correction of a program becomes necessary, the developer acquires an old file that requires correction from the revision management tool. Since the name of the acquired old file is the same as that of the file of the latest revision, the directory of the old file should be separated from that of the latest file. When the old file which contains the bug is corrected and then built, a test for checking the program operation after correction is required. Furthermore, it is necessary to test whether or not consistency between the program after correction and the file of the old revision or between the program after correction and the file of the latest revision is maintained. During such a processing process, when the plurality of files of different revisions is targeted, there has been a possibility that problems such as described above may occur.

### SUMMARY OF THE INVENTION

A first aspect of the present invention is to provide an information processing system between a revision management tool and an editor, the information processing system, comprising: a) a management table storage retaining a management table holding the location information of a file, an object in the file, and either a keyword or link information to the object body, the keyword being a letter string uniquely determined for each of the objects; and b) a reference relation creation module passing to the editor either the keyword or the link information, the keyword and the link information being to be embedded into the file by the editor

A second aspect of the present invention is to provide a method for information processing, comprising: a) generating a reference creation request for creating a dependency relation between objects in files; b) acquiring either keyword or link information to an object body from a management table storage, the keyword and the link information corresponding to the object in the file; c) returning either the keyword or the link information to an editor; and d) embedding either the keyword or the link information in the file.

A third aspect of the present invention is to provide a computer program to be executed by a computer for controlling information processing, comprising: a) instructions for an editor to generate a reference creation request for creating a dependency relation between objects in files; b) instructions for a control module between the editor and a revision management tool to acquire, from a management table storage, either a keyword or link information to an object body, the keyword and the link information being for the object in the file received from the editor; c) instructions for the control module to return either the keyword or the link information to the editor; and d) instructions for the editor to embed either the keyword or the link information into the file.

### BRIEF DESCRIPTION OF DRAWINGS

Fig. 1 is a block diagram showing a constitution of an information processing system according to an embodiment of the present invention.
Fig. 2 is a view (No.1) showing a constitution of the management table shown in Fig. 1.
Fig. 3 is a view (No. 2) showing a constitution of the management table shown in Fig. 1.
Fig. 4 is a view showing an image of an operation screen of an editor.
Fig. 5 is a flowchart showing an operation of creating a reference relation.
Fig. 6 is a view showing a relation between the-control module and the editor in the operation of creating a reference relation.
Fig. 7 is a view (No.1) showing a constitution of a file and an. example of an editor screen in the operation of creating a reference relation.
Fig. 8 is a view (No. 2) showing a constitution of a file and an example of the editor screen in the operation of creating a reference relation.
Fig. 9 is a flowchart showing an operation of link reference.
Fig. 10 is a view showing a relation between the control module and the editor in the operation of link reference.
Fig. 11 is a view showing a constitution of a file and an example of the editor screen in the operation of link reference.
Fig. 12 is a flowchart showing an operation of table update.
Fig. 13 is a view showing a relation between the control module and the editor in the operation of table update.
Fig. 14 is a view showing a constitution of a file and an example of the editor screen in the operation of table update.
Fig. 15 is a flowchart showing an operation of file registration.
Fig. 16 is a view showing a relation between the control module and the editor in the operation of file registration.
Fig. 17 is a view showing a constitution of a file and an example of the editor screen in the operation of file registration.
Fig. 18 is a flowchart showing an operation of file acquisition.
Fig. 19 is a view showing a constitution of a file and an example of the editor screen in the operation of file acquisition.
Fig. 20 is a view showing the manner of file acquisition and registration in the case where there are a plurality of mixed revisions.
Fig. 21 is a flowchart showing an operation of information acquisition from a repository.
Fig. 22 is a flowchart for creating an object from a source program.
Fig. 23 is a flowchart showing an operation of build processing.
Fig. 24 is a view showing a relation between the control module and both the revision management tool and the editor in the operation of build processing.
Fig. 25 is a flowchart showing a step S704 of Fig. 23 in detail.

### DETAILED DESCRIPTION OF THE INVENTION

Various embodiments of the present invention will be described with reference to the accompanying drawings. It is to be noted that the same or similar reference numerals are applied to the same or similar parts and elements throughout the drawings, and the description of the same or similar parts and elements will be omitted or simplified.

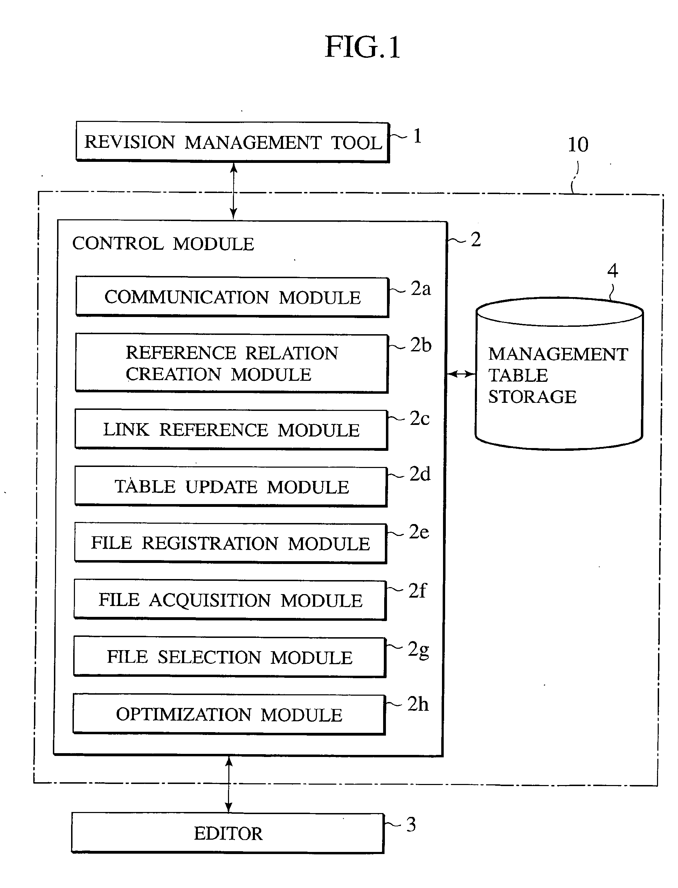

As shown in Fig. 1, an information processing system 10 according to an embodiment of the present invention includes a control module 2 and a management table storage 4. The information processing system 10 lies between a revision management tool 1 for managing revisions of a file and an editor 3 for the editing, building, displaying and the like of the file. The control module 2 manages edit, build, a dependency relation between objects in files for the files acquired from the revision management tool 1 and the editor 3.

The control module 2 includes a communication module 2a, a reference relation creation module 2b, a link reference module 2c, a table update module 2d, a file registration module 2e, a file acquisition module 2f, a file selection module 2g, and an optimization module 2h.

The communication module 2a transfers information received from the editor 3 to the reference relation creation module 2b, the link reference module 2c, the table update module 2d, the file registration module 2e, the file acquisition module 2f, the file selection module 2g, or the optimization module 2h depending on the type of an instruction contained in the information received from the editor 3.

In order to create a reference relation for an object in a file, the reference relation creation module 2b passes a keyword or link information held in the management table storage 4 to the editor 3. The editor 3 embeds the keyword or the link information into the file. Here, the object indicates a variable, a function, or the like. The keyword and the link information will be detailed later.

The link reference module 2c retrieves the keyword or the link information from the management table by an object name received from the editor 3. The link reference module 2c then passes the link information to the object body to the editor 3. Therefore, for example, when an object for reference is selected from the editor 3, the body of the object body can be displayed.

The table update module 2d unifies object information in the file and information registered in the management table storage 4. Specifically, the table update module 2d creates the keyword or the link information to the object body for the object in the file received from the editor 3 and registers the keyword and the link information in the management table.

The file registration module 2e deletes the keyword or the link information, which is embedded by the reference relation creation module 2b, from the file and registers the file thus obtained in the revision management tool 1. Simultaneously, a management table corresponding to the file is registered in the revision management tool 1 together with the file.

The file acquisition module 2f acquires the file from the revision management tool 1. At this time, only the file may be acquired, or the file and the management table corresponding to the file may be acquired.

The file selection module 2g selects the file and a revision of the file specified by the editor 3.

For the object in the file specified by the editor to be subjected to the build processing, the optimization module 2h checks whether a body of the target object exists, whether the target object is duplicated, and whether the target object is used, based on the keyword or the link information embedded in the file.

The management table storage 4 retains a management table holding information regarding the object in the file. The management table storage 4 may employ internal storage such as RAM and external storage such as a HD or a FD.

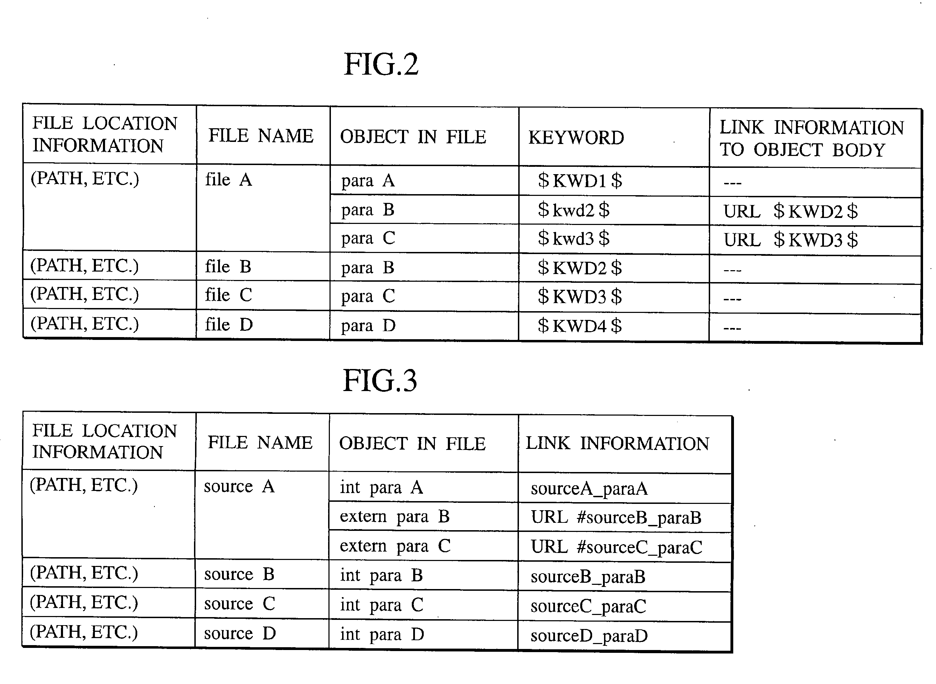

As shown in Fig. 2, the management table holds, for example, "file location information" such as a path indicating the hierarchy structure of a file, a "file name", an "object in the file", a "key word" and "link information to the object body" corresponding to the object, or the like. The "file location information" is not limited to one. The management table may include a plurality of pieces of "file location information" such as a file location when the editor 3 uses the file and a file location of the different revision of the same file name. The "key word" is a character string uniquely determined for each object. As an example thereof, Fig. 2 shows "$KWD1$" or the like. The "keyword" shown in Fig. 2 is expressed in uppercase letters when the object thereof is the body, and the "keyword" is expressed in lowercase letters when the object thereof is not the body but the object for reference. For the object for reference, the "link information to the object body" indicates a location where the object body is declared. In the case of using the management table 4 as shown in Fig. 2, the reference relation creation module 2b embeds the "keyword" into the file.

As shown in Fig. 3, the management table may include the "file location information", the "file name", the "object in the file", and the "link information ", not including the "keyword". In Fig. 3, sourceA_paraA, sourceB_paraB, sourceC_paraC, and sourceD_paraD are examples of the link information in the case where the corresponding object is the body, and URL#sourceB_paraB and URL#sourceC_paraC indicate that the corresponding objects are the objects for reference. In the case of using the management table shown in Fig. 3, the reference relation creation module 2b embeds the "link information" in the file.

The management table storage 4 is accessible only by the control module 2.

The revision management tool 1 manages the change history of a source file or a text file of a program targeted for development and evaluation.

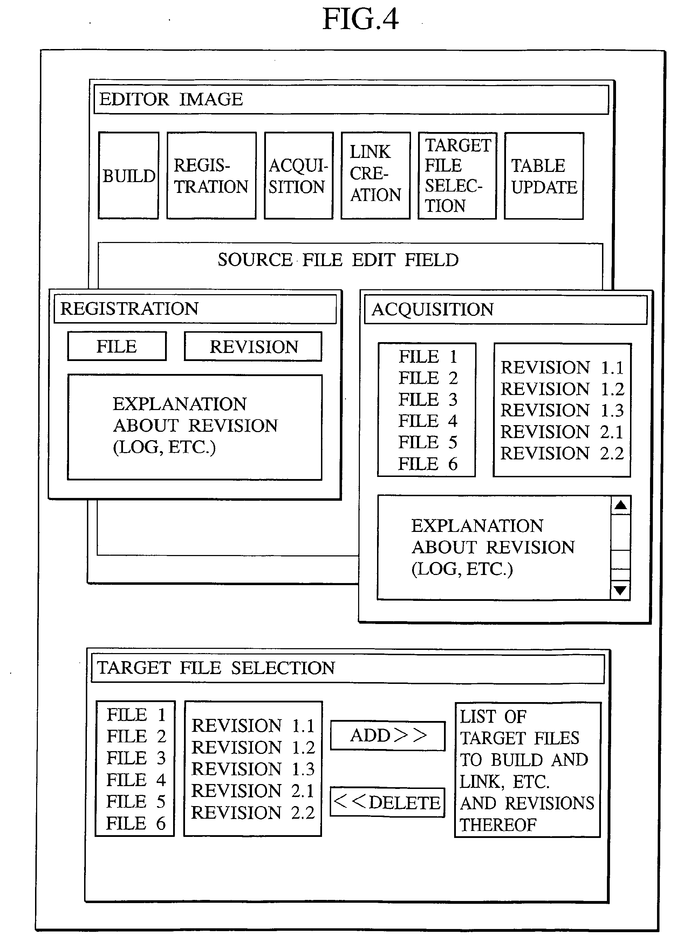

The editor 3 performs processing such as the edit, build, and display of the file acquired from the control module 2. The editor 3 displays, for example, an operation screen as shown in Fig. 4. On the operation screen, the contents of the file are edited, the dependency relation between objects in files is operated, and the build is performed. Fig. 4 shows a screen where a "registration" window, an "acquisition" window, and a "target file selection" window are displayed by depressing a "registration" button, an "acquisition" button, and a "target file selection" button in an "Editor image" window, respectively.

With the information processing system according to the embodiment of the present invention, trouble with reference between files is eliminated, and the efficiency of editing work can be improved. Moreover, a build relation of files acquired from the revision management tool can be easily created. Accordingly, the mistake wherein another revision is targeted for build does not occur.

Next, a description will be made of an information processing method which is carried out by the information processing system 10 according to the embodiment of the present invention. As for the information processing method, a description will be made below of a reference relation creation method for embedding the keyword or the link information into a file, a method for referring a link between files based on the keyword or the link information, an update method of the management table, a method of file registration to the revision management tool, a method of file acquisition from the revision management tool 1, a method of file acquisition from the repository, and the build method of a file.

### (Reference relation creation)

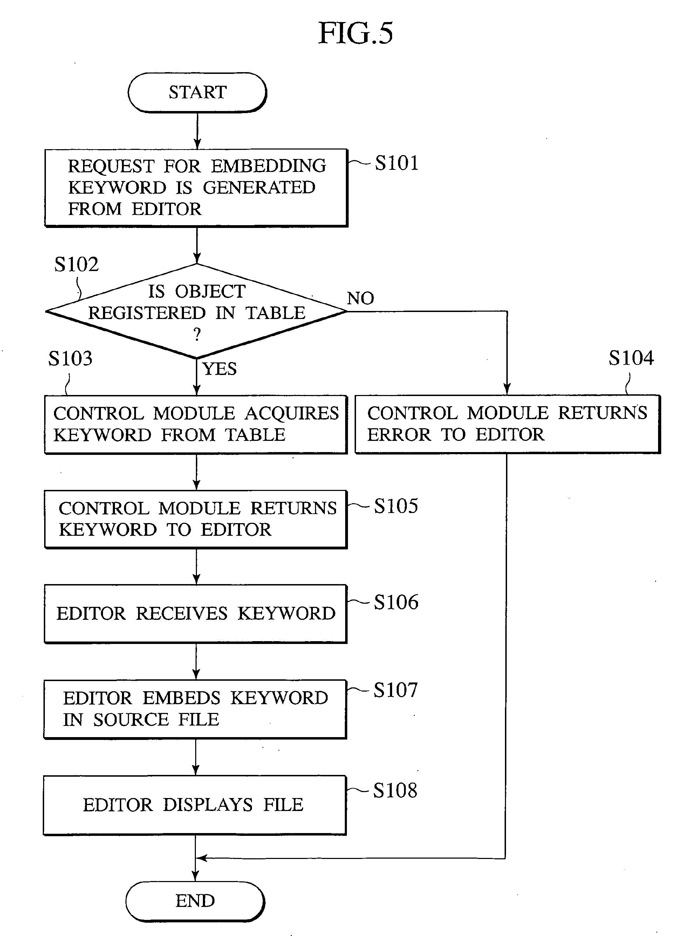

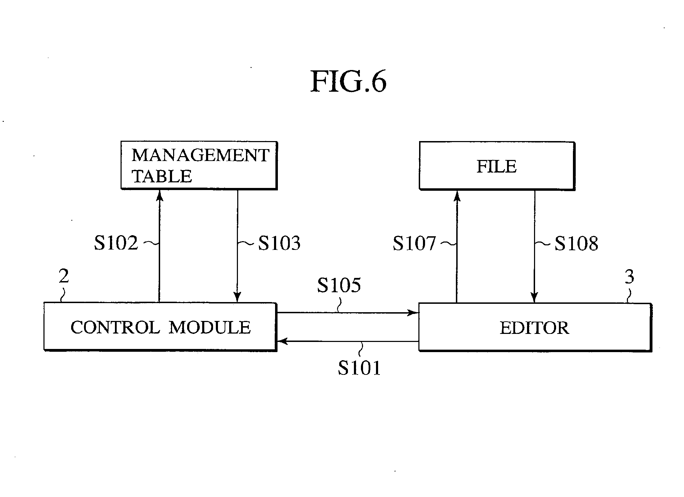

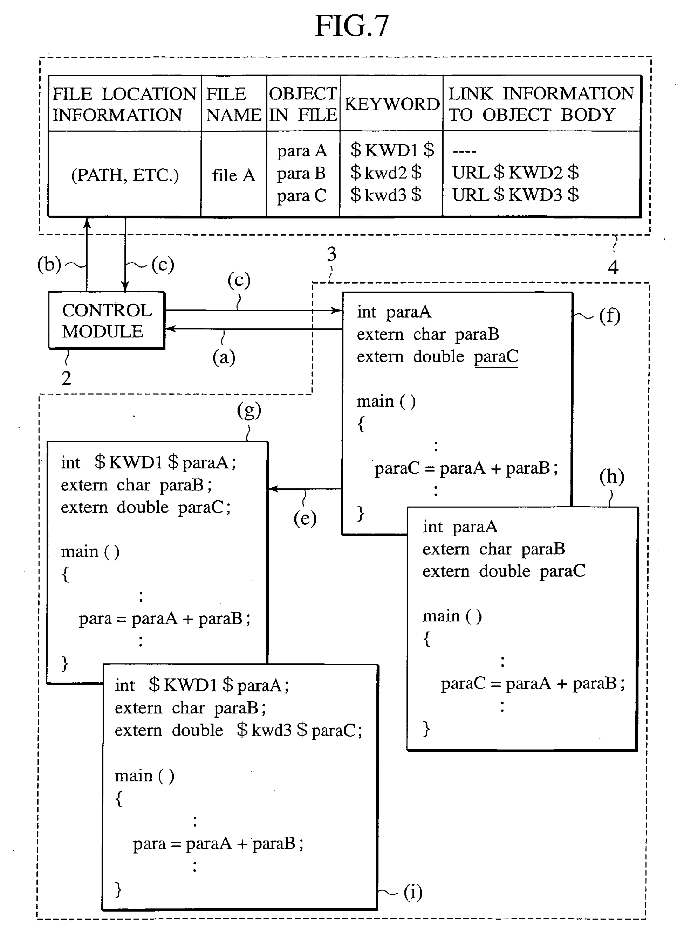

First, the method of embedding the keyword or the link information into a file for creating the reference relation of the object will be described using Figs. 5 and 6. Although a description below will be made of the method of embedding the keyword, the link information may also be embedded. Here conceived, is a case of creating a link to the body of an object paraC used in a file fileA (Fig. 7(g)).
(a) First, in a step S101, a user selects an object paraC displayed in the editor 3 (Fig. 7(f)) and makes a request for embedding a keyword. The embedding request is, for example, made by depressing a "link creation" button shown in Fig. 4 on the editor 3. The editor 3 gives a name of the paraC, a file name (here, fileA) specified as a target for processing in the editor 3, and the type of an instruction generated in the editor 3 to the communication module 2a (Fig. 7(a)). When the type of the instruction is a link creation, the communication module 2a transmits information received from the editor 3 to the reference relation creation module 2b.
(b) Next, the reference relation creation module 2b retrieves the management table relating to the fileA from the management table storage 4 (Fig. 7(b)). In a step S102, the reference relation creation module 2b judges whether or not the object paraC is registered in the management table. When information regarding the paraC does not exist in the management table 4, the procedure proceeds to a step S104, and the reference relation creation module 2b returns an error to the editor 3. On the other hand, when the information relating to the paraC is in the management table, the procedure proceeds to a step S103, and the reference relation creation module 2b acquires the keyword from the management table (Fig. 7(c)). In a step S105, the reference relation creation module 2b returns a keyword $kwd3$ corresponding to the paraC to the editor 3 (Fig. 7(d)).
(c) Next, in a step S106, the editor 3 receives the keyword $kwd3$ from the reference relation creation module 2b. In a step S107, the editor 3 embeds the keyword into an appropriate position in the file A(Fig. 7(e)). As a result, the keyword $kwd3$ is embedded into a portion of the paraC in the fileA (Fig. 7(i)). In a step S108, the editor 3 displays that the link is created in the file (Fig. 7 (h)). Hereinafter, in the drawings, each underlined object on the display of the editor 3 indicates that the link thereof is created.

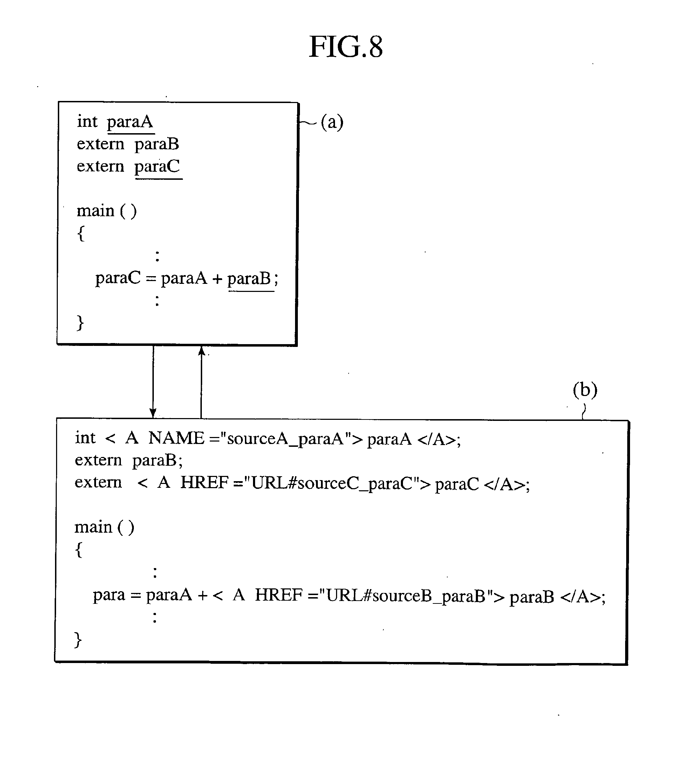

Fig. 8 shows an example wherein the link information is embedded into the file, instead of the keyword. On the editor 3, for the object (Fig. 8 (a)) displayed with an underline, the link information shown by brackets <> is embedded in a source file (Fig. 8 (b)).

As described above, the reference relation of the object can be created by retrieving the management table.

### (Link reference)

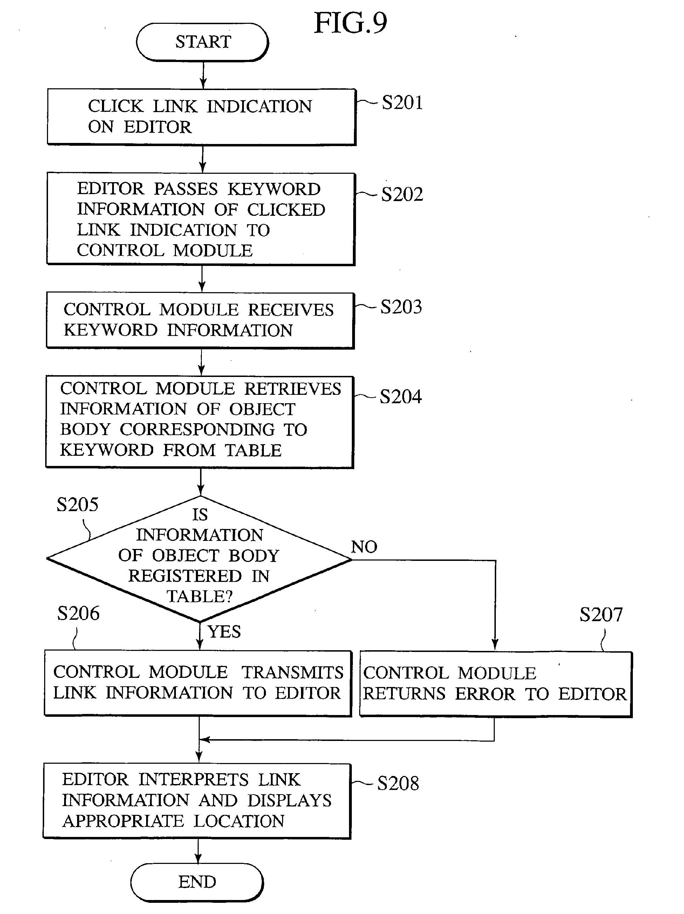

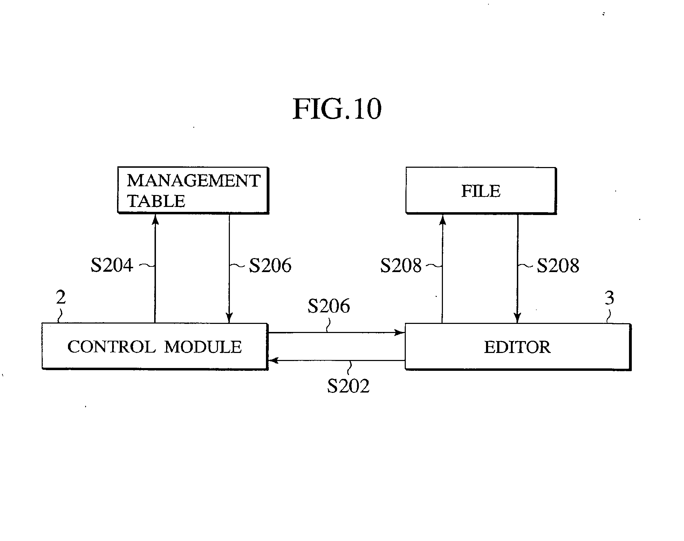

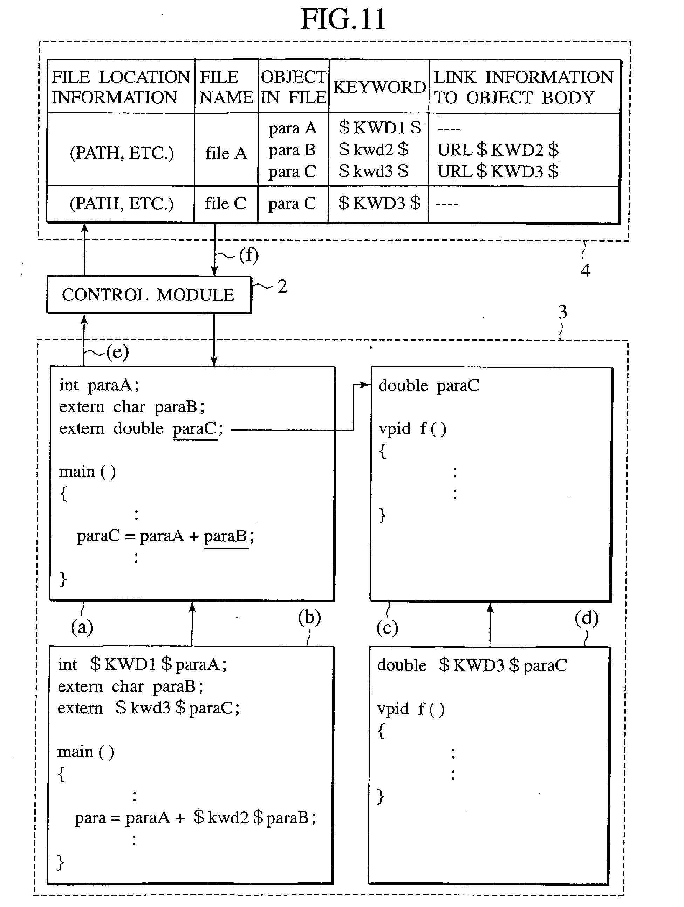

Next, the operation of referring the link will be described using Figs. 9 and 10. Here conceived is a case of selecting the object in which the link is created in the above-described processing. The dependency relation between objects in files is understood by referring to the link information. The link reference from the keyword in the management table will be described below. However, when the link information is included in the management table, as shown in Fig.3, the link may be referred by the link information.
(a) The keyword $kwd3$ embedded in the fileA (Fig. 11(b)) is displayed on the editor 3 as a link for the paraC as shown in Fig. 11(a). When the paraC is selected in a step S201, the editor 3 passes the keyword $kwd3$ in the portion of the selected object, the file name (here, fileA) targeted for the processing in the editor 3, and the type of the instruction to the communication module 2a (Fig. 11(e)). When the type of the instruction is a link reference, the communication module 2a transmits the information received from the editor 3 to the link reference module 2c.
(b) Subsequently, in a step S203, the link reference module 2c receives the keyword $kwd3$, the file name fileA, and the type of the instruction from the editor 3. In a step S204, the link reference module 2c then retrieves the keyword $kwd3$ from the management table relating to the fileA.
(c) In a step S205, the link reference module 2c judges whether or not information regarding the object body is registered in the management table. When the information is not registered in the management table, the procedure proceeds to a step S207, and the link reference module 2c returns an error to the editor 3. On the other hand, when the information is registered in the management table, the procedure proceeds to a step S206, the link reference module 2c acquires link information URL$KWD3$ to the object body corresponding to the keyword $kwd3$ (Fig. 11(f)) and then transmits the link information to the editor 3. The URL part of the link information is file location information indicating a location of a fileC in the management table.
(d) The editor 3 receives the link information URL$KWD3$ from the link reference module 2c and identifies the location of the fileC from the URL part. The editor 3 then learns the body of the paraC in the fileC based on the information of the link information $KWD3$ (Fig. 11(d)). Next, in a step S208, the link information $KWD3$ thus learned is displayed on the editor 3 (Fig. 11(c)).

As described above, the dependency relation between objects in files can be traced by retrieving the management table and referring the link.

### (Management table update)

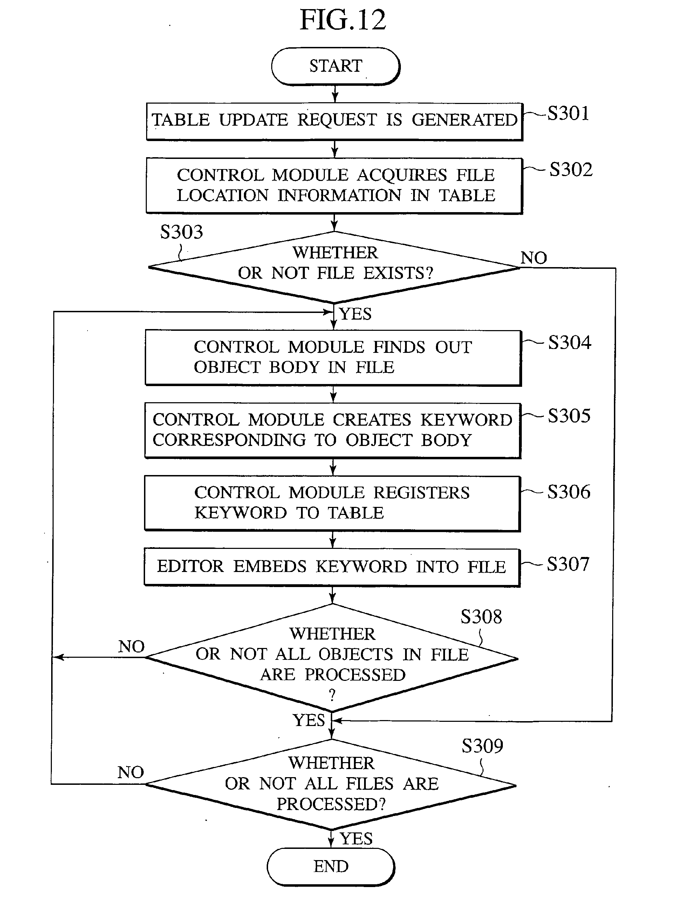

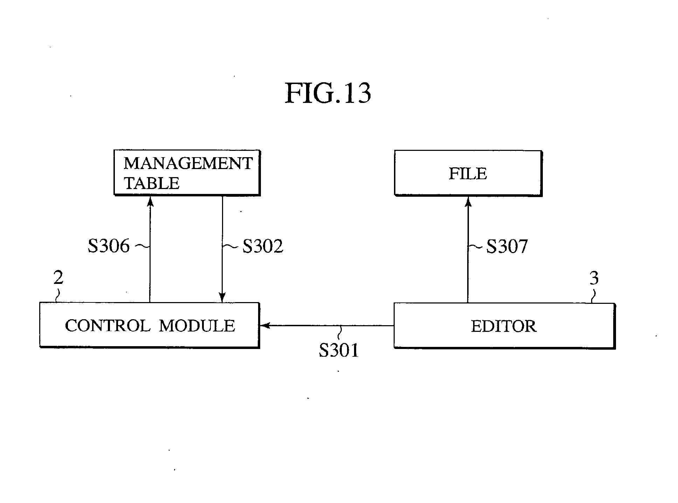

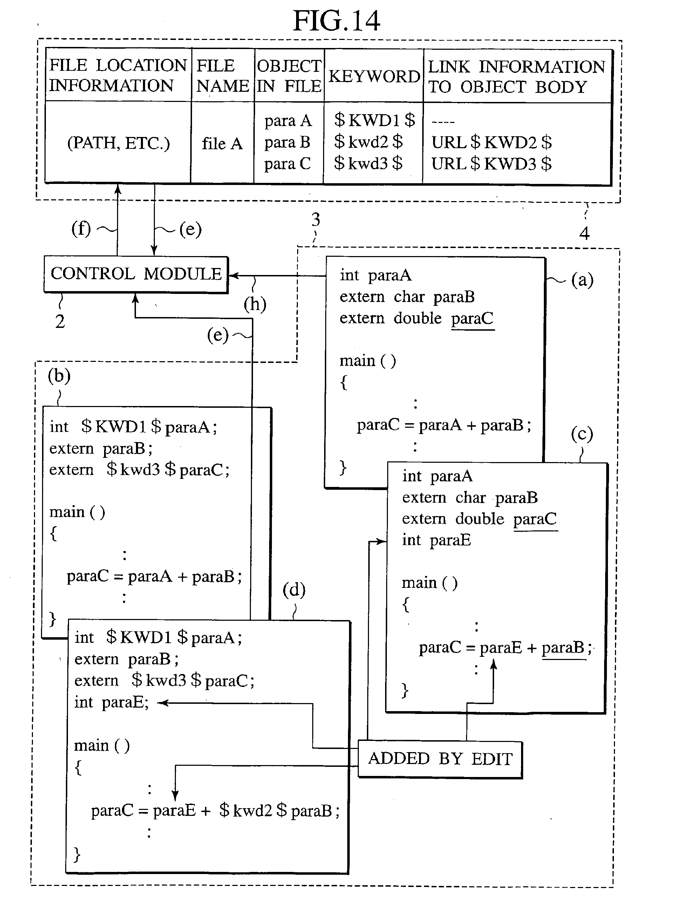

Next, an update operation of the management table will be described using Figs. 12 and 13. Here conceived is a case wherein the object information in the file differs from the information registered in the management table as a result of editing the file. For example, as a result of editing the fileA shown in Fig. 14(b) with the editor 3, paraE is newly added in the fileA (Fig. 14(d)). On the editor 3, the fileA is displayed as shown in Fig. 14(a) before editing, and the fileA is displayed as shown in Fig. 14(c) after editing. In this case, the information existing in the fileA and the information in the management table relating to the fileA are different from each other. Accordingly, for example, when a link to the paraE is intended to be created in an associated fileZ and the reference relation creation module 2b performs retrieval from the management table, the retrieval results in an error because the paraE does not exist in the management table. In order to avoid such a situation, it is necessary to update the information in the management table.

A description will be made for creation of the keyword in the management table as shown in Fig.2 for a new object below, but the link information may be created as shown in Fig.3.
(a) In the case of updating the management table, for example, the user first depresses the "table update" button shown in Fig. 4 to generate an update request in a step S301. The editor 3 transfers the file name (here, fileA) targeted for processing on the editor 3, and the type of the instruction to the communication module 2a (Fig. 14(h)). When the type of the instruction is a table update, the communication module 2a transmits the information received from the editor 3 to the table update module 2d.
(b) Subsequently, in a step S302, the table update module 2d having received the request from the editor 3 acquires the location information of the file from the management table relating to the fileA (Fig. 14(g)). In a step S303, the table update module 2d recognizes the location of the file from the acquired information. In the case where the file exists, the procedure proceeds to a step S304. After checking the location of the file, the table update module 2d acquires the object paraA, paraB, paraC, or paraE (Fig. 14(e)) from the fileA and registers the same in the management table (Fig. 14(f)). Simultaneously, in a step S305, the table update module 2d creates the keyword indicating the object to be embedded in the object in the file to be updated. In a step S306, the keywords are registered in the management table.
(c) Subsequently, in a step S307, the editor 3 embeds the keywords created by the table update module 2d into the file. In a step S308, the editor 3 judges whether or not all the objects have been processed. In a case where all the objects have not been processed, the procedure returns to the step S304. In a case where all the objects have been processed, the procedure proceeds to a step S309 and the editor 3 judges whether or not all the files have been processed. In a case that all the files have not been processed, the procedure returns to the step S304.

The above-described processing is performed for every object in every file. Accordingly, the information in the management table can be updated, and the file and the information in the management table can be synchronized.

### (File registration)

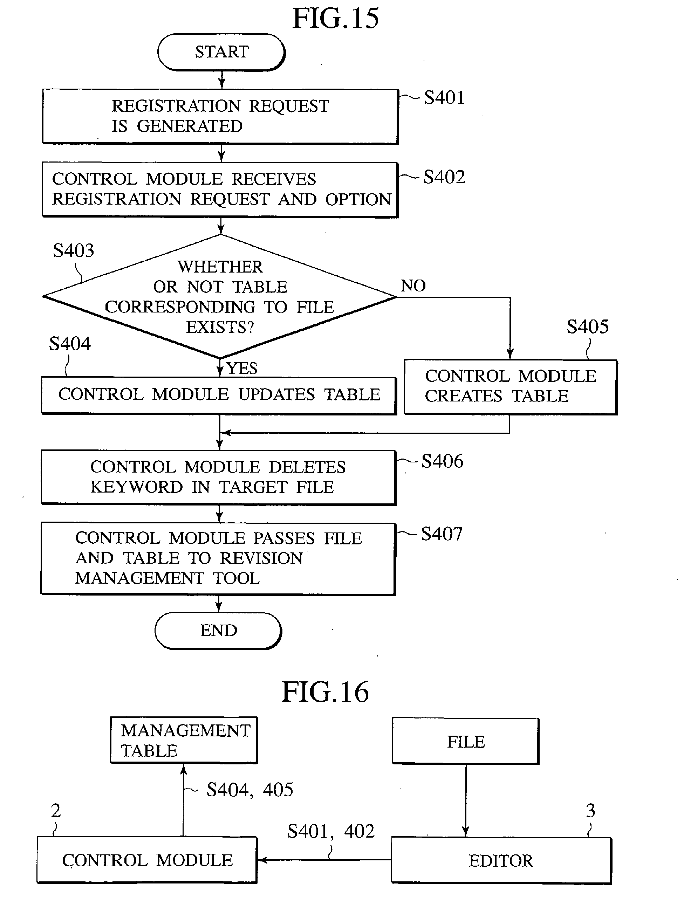

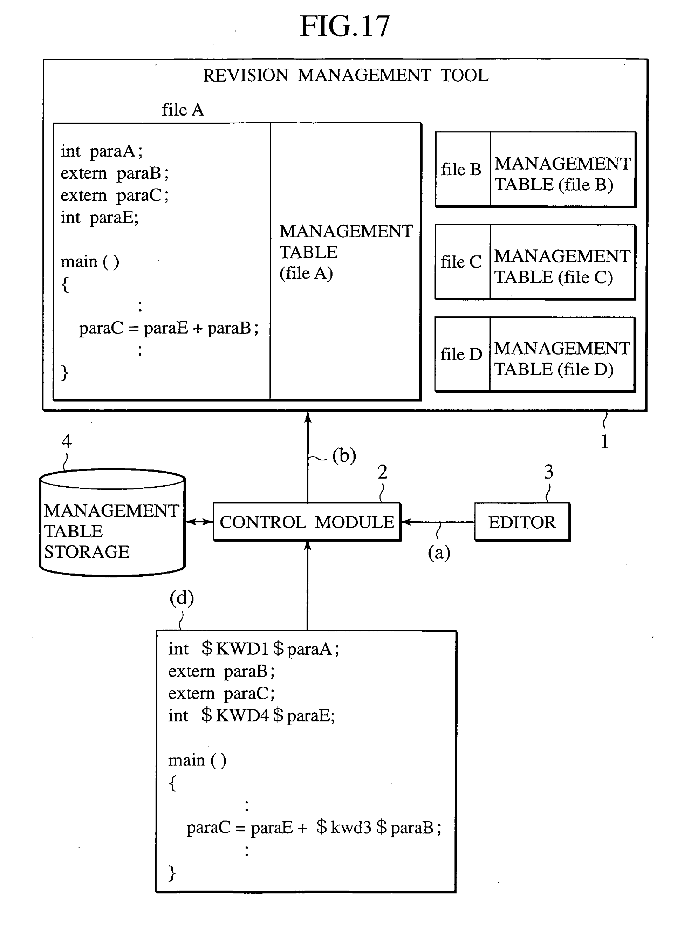

Next, a description will be made of an operation for registering a file to the revision management tool 1 using Figs. 15 and 16.
(a) In a step S401, for example, the user depresses the "registration" button shown in Fig. 4 to generate a registration request. In a step S402, the editor 3 passes the file name that is desired to be registered in the revision management tool 1, the revision of the file, and the type of the instructions that are specified by the user to the communication module 2a (Fig. 17(a)). For example, the file name desired to be registered is fileA, and the revision of the file is 1.2. In the case where the type of the instruction is file registration, the communication module 2a transmits the information received from the editor 3 to the file registration module 2e.
(b) Subsequently, in a step S403, the file registration module 2e judges whether the management table corresponding to the file exists in the management table storage 4. In the case where the corresponding management table exists therein, the procedure proceeds to a step S404, and the file registration module 2e updates the management table based on the information received from the editor 3 and the location information of the fileA in the management table. In the case where the corresponding management table does not exist in the management table storage 4, the procedure proceeds to a step S405, and the file registration module 2e creates the management table relating to the fileA based on the information received from the editor 3 and the location information of the fileA in the management table.
(c) Subsequently, in a step S406, the file registration module 2e deletes all the keywords, for example,$KWD1$,$KWD4$, and $kwd3$ that exist in the fileA shown in Fig. 17(d). Alternatively, for the file shown in Fig. 8, the file registration module 2e deletes the link information shown in brackets <>. In a step S407, the file registration module 2e passes the fileA in which the keywords or the link information are deleted and the management table relating to the fileA (fileA), to the revision management tool 1, and executes the registration (Fig. 17(b)). Here, the file registration module 2e may pass the file name, the revision of the file, and the type of the instruction, which are received from the editor 3, to the revision management tool 1. In the revision management tool 1 shown in Fig. 17, the fileB together with the management table relating to the fileB, the fileC together with the management table relating to the fileC, and the fileD together with the management table relating to the fileD are registered.

With the above described processing, when the control module 2 acquires the file from the revision management tool 1, the control module 2 can simultaneously acquire the latest management table relating to the file, and it becomes possible for the management table to be maintained in the latest state.

### (File acquisition)

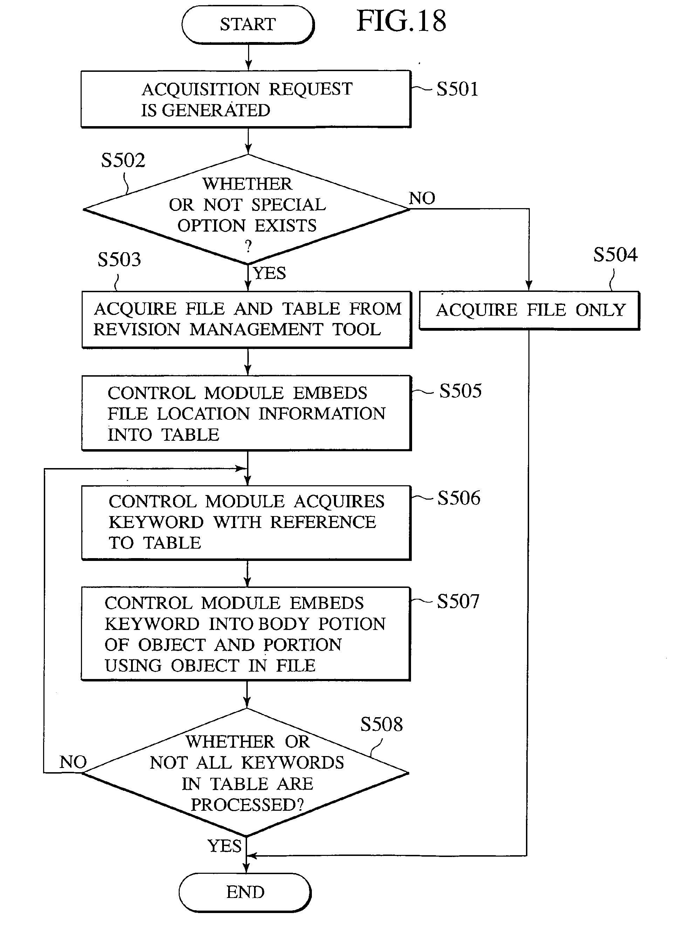

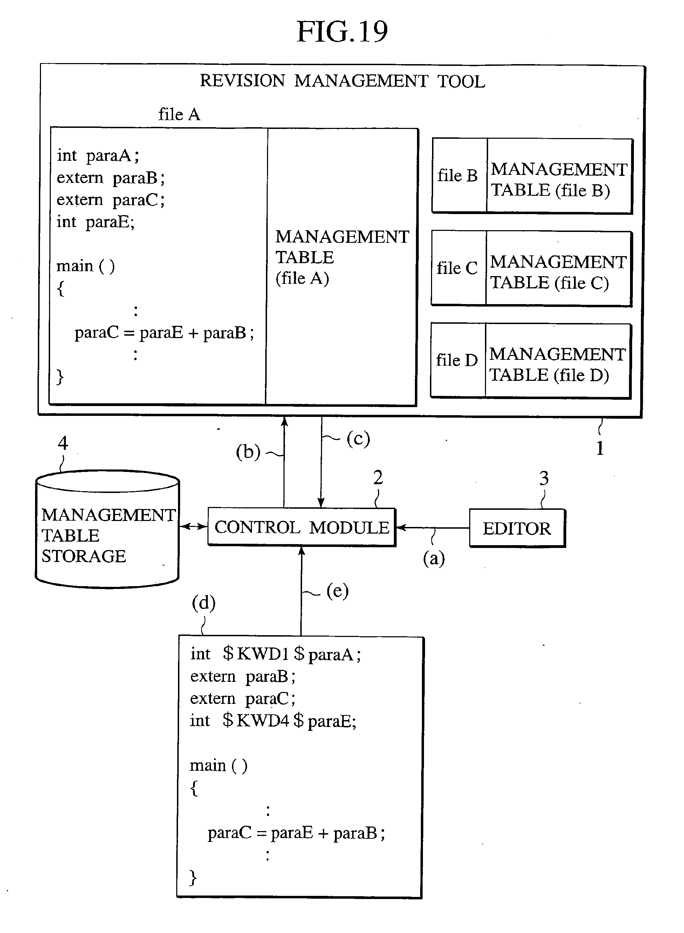

Next, a description will be made of an operation for acquiring the file from the revision management tool 1 using Fig. 18.
(a) Here conceived, is a case of acquiring the file of a certain revision from the revision management tool 1. First, in a step S501, for example, the user depresses the "acquisition" button shown in Fig. 4 to generate an acquisition request. The editor 3 passes the file name, the revision of the file, and the type of instructions that are specified by the user to the communication module 2a (Fig. 19(a)). For example, the file which is desired to be acquired is the fileA, and the revision of the file is 1.2. At this time, the editor 3 can also pass a special option to the communication module 2a if selected by the user. Here, the "special option" is also an option indicating whether the table is acquired with the file when the file is acquired. In the case where the type of the instruction is file acquisition, the communication module 2a transmits the information received from the editor 3 to the file acquisition module 2f.
(b) Subsequently, in a step S502, the file acquisition module 2f judges whether the special option exists in the information passed from the editor 3. In a case where the special option does not exist therein, the procedure proceeds to a step S504, and the file acquisition module 2f acquires the file only. In a case where the special option exists therein, the procedure proceeds to a step S503, and the file acquisition module 2f passes the information received from the editor 3, such as the file name, the revision of the file, and the type of the instruction to the revision management tool 1 (Fig. 19(b)). The file acquisition module 2f then acquires the fileA and the management table relating to the fileA (fileA) from the revision management tool 1 (Fig. 19(c)). In a step S505, the file acquisition module 2f embeds the acquired information relating to the fileA (location information of the fileA, keywords, and the like) into the management table within the management table storage 4.
(c) Subsequently, in a step S506, the file acquisition module 2f acquires the keywords registered in the fileA, for example,$KWD1$ or $KWD4$ and the like, with reference to the management table (fileA). Alternatively, in the case of the file shown in Fig. 8, the file acquisition module 2f acquires the link information shown in the brackets < >. Subsequently, in a step S507, the file acquisition module 2f embeds the acquired keywords $KWD1$ and $KWD4$ or link information into the body portion of the object and the portion using the object in the file (Fig. 19(d)). In a step S508, the file acquisition module 2f judges whether all the keywords or all the pieces of the link information in the table have been processed. In the case where the processing for all the keywords or all the pieces of the link information is not completed, the procedure returns to the step S506. After the above-described processing, the file acquisition module 2f stores the fileA in a location uniquely determined for each revision, for example, in a directory (Fig. 19(e)). The file acquisition module 2f registers the location where the file is stored (including the directory) to the file location information in the management table. At this time, the file location information includes the file location information obtained from the revision management tool 1 and the file location information stored by the file acquisition module 2f for use in the editor 3.

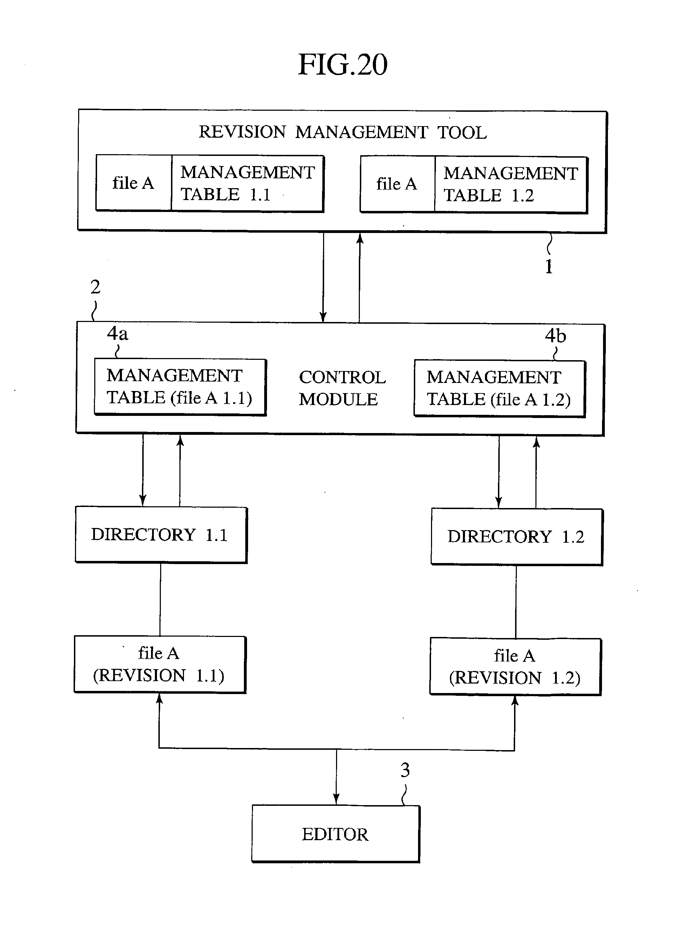

As shown in Fig. 20, in some cases, the revision management tool 1 contains a plurality of revisions such as a management table 1.1 and a management table 1.2 for the fileA. The file acquisition module 2f acquires the fileA of revision 1.1 (management table 1.1) from the revision management tool 1, holds the management table 1.1 as the management table (fileA1.1) 4a, and retains the fileA (revision 1.1) in a directory 1.1. For the fileA of revision 1.2 (management table 1.2), the file acquisition module 2f holds the management table 1.2 as the management table (fileA 1.2) 4b and retains the fileA (revision 1.2) in a directory 1.2. In the case where a plurality of revisions exist as described above, in the step S501 of Fig. 18, the user can select the file name and the revision of the file, for example, from the "acquisition" window as shown in Fig. 4. In the case where the fileA revision 1.1 is selected from the editor 3, the file selection module 2g refers to the directory 1.1, and the fileA (revision 1.1) is displayed on the editor 3. In the case where the fileA revision 1.2 is selected from the editor 3, the file selection module 2g refers to the directory 1.2, and the fileA (revision 1.2) is displayed on the editor 3. Additionally, in the case where the revision of the file that the control module 2 has not acquired is selected, it may be designed such that the file acquisition module 2f sends an acquisition request to the revision management tool 1 and acquires the desired revision from the revision management tool 1 to display the same on the editor 3.

By the above-described method, the file of the specified revision can be acquired from the revision management tool 1. Even in the case where a plurality of revisions are mixed, the target for processing in the editor 3 can be specified.

### (Acquisition from repository)

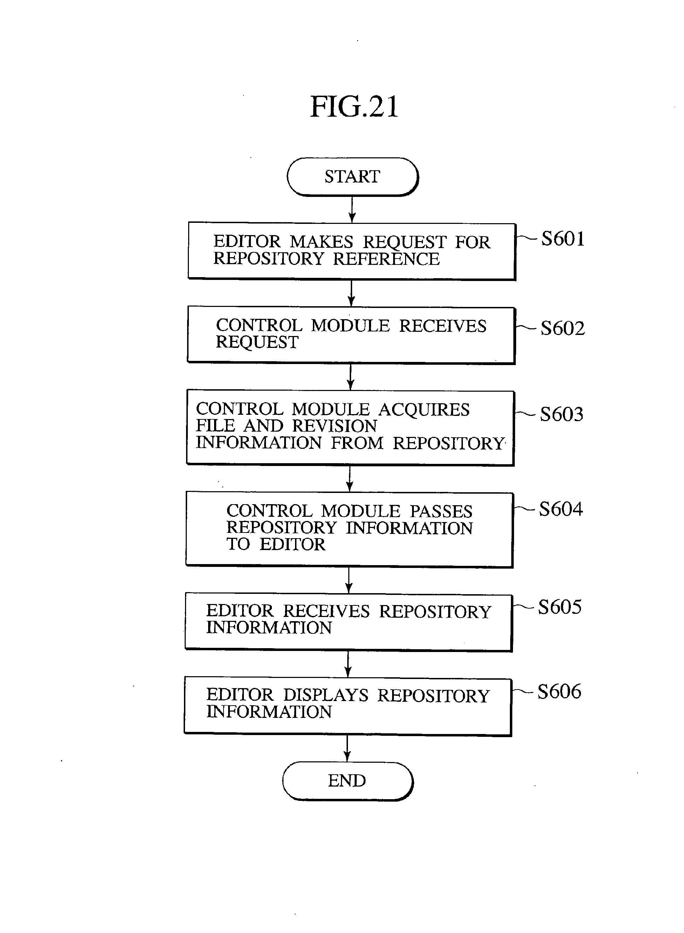

Next, a description will be made of an operation for acquiring information from a repository and referring to the information using Fig. 21. The repository retains a master copy of the file in the revision management tool 1.
(a) First, in a step S601, the editor 3 sends the file name targeted for processing in the editor 3 and the type of the instruction to the communication module 2a. In a step S602, in the case where the type of the instruction is repository reference, the communication module 2a which has received the instruction transmits the information received from the editor 3 to the file acquisition module 2f. Then, in a step S603, the file acquisition module 2f acquires the file and the revision information from the repository of the revision management tool 1. In a step S604, the file acquisition module 2f then passes the information acquired from the repository to the editor 3.
(b) Subsequently, in a step S605, the editor 3 receives the repository information from the file acquisition module 2f. In step S606, the editor 3 displays the received information on the operation screen.

With the above-described method, information can be easily acquired, and referred to, from the repository.

### (Build processing)

In build processing of an application, when the source file includes a duplicate object, an object which is only declared but not used, or an object with no entity, typically, a linker performed optimization process such as elimination of the information thereof. Since such information could not be eliminated by the conventional preprocessor, compiler, or assembler, the information was given to the compiler, assembler, and the linker even though the information was unnecessary. Accordingly, the build time as a period of the time taken in creating the object, took more time than necessary.

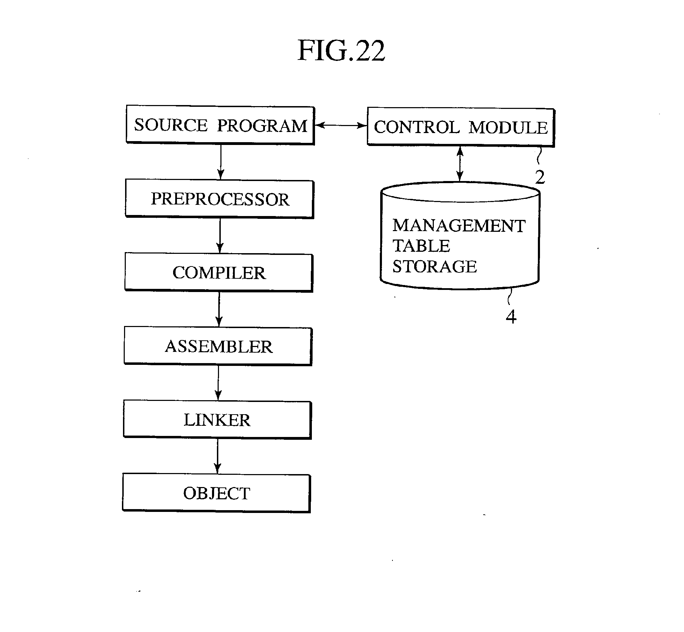

Fig. 22 shows an example of processing when creating the object from the source program. The source program is passed through a preprocessor, a compiler, an assembler, and a linker and the object is thus created. In the embodiment of the present invention, during the build processing process shown in Fig. 22, the optimization processing, which has been hitherto carried out in the build process in downstream such as the linker, is carried out in upstream, specifically, before the preprocessor. Therefore, the unnecessary information is eliminated at an early stage, and the amount of information to be processed is reduced, thus reducing the build time.

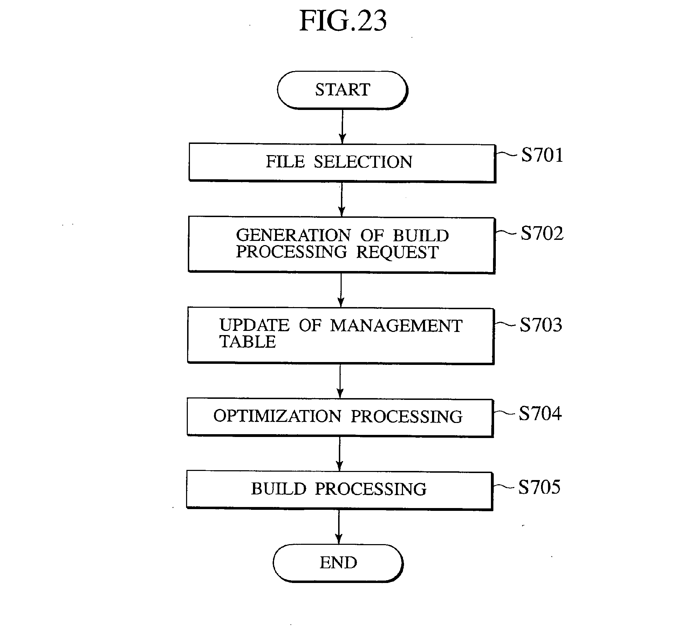

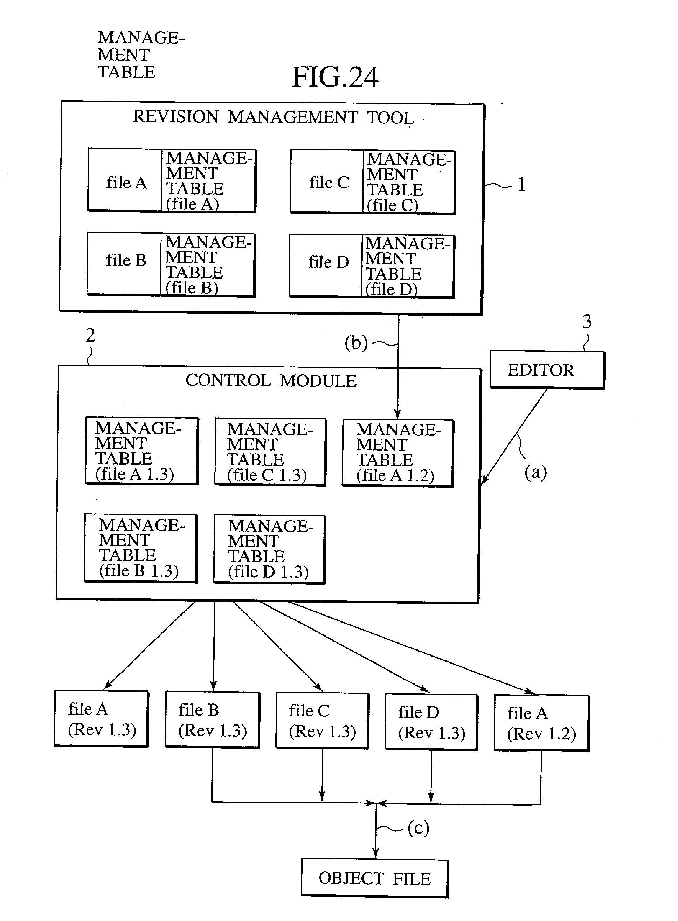

Next, a description will be made of the build processing in an information processing method according to the embodiment of the present invention using Fig.23.
(a) First, in a step S701, the editor 3 selects a file to be subjected to the build processing, and the revision of the file. For example, in Fig. 24, in a state whereby the user selects the fileA, the fileB, the fileC, and the fileD of revision 1.3 as the targets of the build processing on the editor 3, when build processing is performed on the editor 3, the files of the fileA, the fileB, the fileC, and the fileD of revision 1.3 are built. Here, it is assumed that it is necessary to build the fileA as revision 1.2, and the fileB, the fileC, and the fileD as revision 1.3. In such a case, on the editor 3, the revision 1.3 of the fileA is deleted from the target files, and the revision 1.2 of the fileA is added thereto. Specifically, for example, the "target file selection" button shown in Fig. 4 is depressed, the revision 1.3 of the fileA is deleted from the "target file selection" window, and the revision 1.2 of the fileA is then added. Since the fileA of revision 1.2 is not acquired from the revision management tool 1 at the point of the addition, the file acquisition module 2f acquires the fileA of revision 1.2 from the revision management tool 1 by the file acquisition method described above using Fig. 18 (Fig. 24(b)).
(b) Subsequently, in a step S702, when the user makes a build request, for example, by depressing the "build" button shown in Fig. 4, the target files to build or the revisions of the target files to build are passed from the editor 3 to the control module 2 (Fig. 24(a)). In Fig. 24, the fileA of revision 1.2, and the fileB, the fileC, and the fileD of revision 1.3 are passed (Fig. 24(c)).
(c) Subsequently, the communication module 2a which has received the build request passes the information received from the editor 3 to the table update module 2d. In a step S703, the table update module 2d performs update processing of the management table. Since the procedure of the update processing is similar to that of Fig. 12, explanation thereof will be omitted. By the update processing, the information of the file and the information in the management table storage 4 are synchronized. On completing the processing, the table update module 2d notifies the communication module 2a of completion of the table update.
(d) Subsequently, the communication module 2a passes the information received from the editor 3 to the optimization module 2h. In a step S704, the optimization module 2h performs optimization processing of the files. The optimization processing is processing for eliminating the duplicate object, the object that is only declared but not actually used, the object with no entity, or the like, in the source file. The optimization processing will be detailed later.
(e) Subsequently, in a step S705, the source program, after the optimization processing, is passed to the preprocessor, the compiler, the assembler, the linker and the object for the build processing.

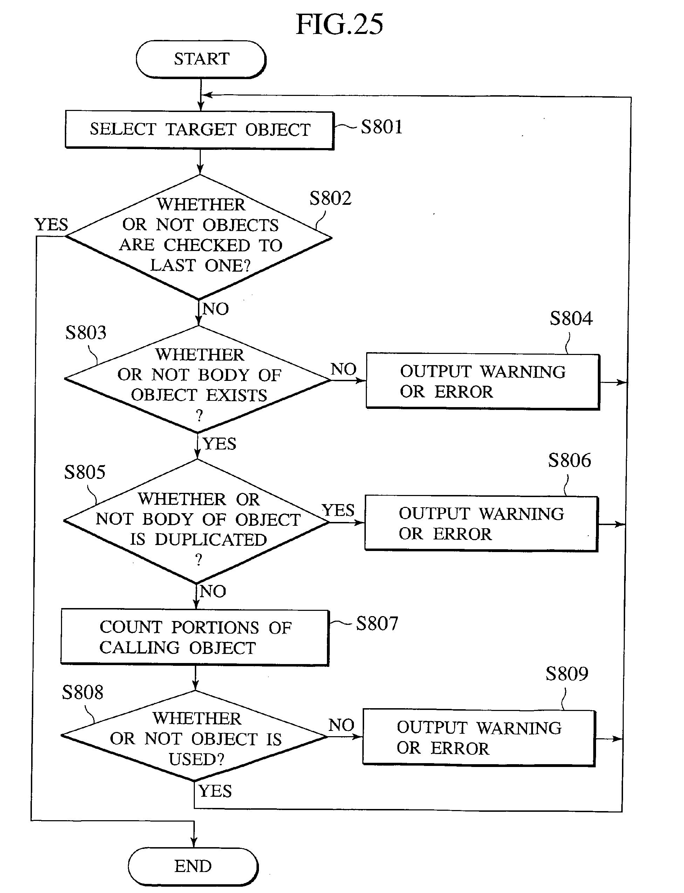

Next, a description will be made of the optimization processing in the step S704 of Fig. 23 using Fig. 25.
(a) First, in a step S801, the optimization module 2h selects the object as a target for checking by use of the keywords or link information embedded into the file. In a step S802, the optimization module 2h judges whether or not checking is performed to the last object. If checking is finished to the last object, the processing ends.
(b) If there remains an object to be checked, the procedure proceeds to a step S803, and the optimization module 2h checks whether or not the body of the selected object exists. In the case whereby the body of the selected object does not exist, the procedure proceeds to a step S804, and a warning or an error is outputted. Alternatively, such an object may be eliminated. In the case that the body thereof exists, the procedure proceeds to a step S805.
(c) Subsequently, in the step S805, the optimization module 2h checks whether or not the object body is duplicated, using the keyword or the link information. In the case where the object is duplicated, the procedure proceeds to a step S806, and a warning or an error is outputted. Alternatively, the object may be eliminated. In the case where the object body is not duplicated, the procedure proceeds to a step S807.
(d) Subsequently, in the step S807, the optimization module 2h counts portions of calling the object using the keyword or the link information. In a step S808, the optimization module 2h judges whether or not the object is used based on the number of portions of calling the object. In the case where the number of calling the object is zero, the object is not used. Accordingly, the procedure proceeds to a step S809, and a warning or an error is outputted. Alternatively, the object may be eliminated. The procedure then returns to the step S801.

With the above-described optimization processing, any unused objects or the like can be found and detected before compiling the source program. As a result, unnecessary information is not passed to the compiler, the assembler, or the like shown in Fig. 22, and the reduction of the build time can thus be realized.

In the case where the link information is expanded not only to files but also to a library which is a collection of generally-used functions, the reference of the object body can be realized by previously registering location information of a file of the library in the management table.

As described above, by the information processing method according to the embodiment of the present invention, the efficiency of the edit work can be improved while suppressing reference problems between files, by creating a link which is capable of displaying the dependency relation between objects in files. Moreover, since the build relation of the file acquired from the revision management tool can easily be created, the possibility of a mistake wherein a different revision is set as a target for build may occur, can be suppressed.

On the other hand, since unnecessary information passed to the compiler, the assembler, and the linker can be reduced in the build processing by use of the keyword or the link information, the period of time for creating the objects can be reduced. Moreover, the present invention can support the development of the source file and can be applied to revision management. Accordingly, the problem whereby the source files of various versions are mixed on a network can be avoided.

Although the present invention has been described according to the aforementioned embodiment, the description and the drawings constituting part of the disclosure should not be understood to limit the present invention. Various alternative embodiments, embodiments, and operational techniques will become apparent to those skilled in the art from the disclosure.

Various modifications will become possible for those skilled in the art after receiving the teachings of the present invention without departing from the scope thereof.

## Claims

1. An information processing system between a revision management tool and an editor, the information processing system, comprising:
a management table storage retaining a management table holding the location information of a file, an object in the file, and either a keyword or link information to the object body, the keyword being a letter string uniquely determined for each of the objects; and
a reference relation creation module passing to the editor either the keyword or the link information, the keyword and the link information being to be embedded into the file by the editor.

2. The information processing system of claim 1, further comprising;
a link reference module retrieving either the keyword or the link information from the management table by a name of the object transferred from the editor and passing link information to the object body to the editor.

3. The information processing system of claim 1, further comprising:
a table update module creating either the keyword or the link information and registering either the keyword or the link information in the management table, the keyword and the link information being for the object in the file passed from the editor.

4. The information processing system of claim 1, further comprising:
a file registration module deleting either the keyword or the link information and registering the file thus obtained in the revision management tool, the keyword and the link information being embedded in the file by the editor.

5. The information processing system of claim 1, further comprising:
a file selection module selecting a file and a revision of the file that are specified by the editor; and
a file acquisition module acquiring the file of the revision selected by the file selection module from the revision management tool.

6. The information processing system of claim 1, further comprising:
an optimization module checking, the objects in the file specified to be subjected to build processing by the editor, whether a body of a target object exists, whether the target object is duplicated, and whether the target object is used, based on either the keyword or the link information, the keyword and the link information being embedded into the file.

7. A method for information processing, comprising:
generating a reference creation request for creating a dependency relation between objects in files;
acquiring either keyword or link information to an object body from a management table storage, the keyword and the link information corresponding to the object in the file;
returning either the keyword or the link information to an editor; and
embedding either the keyword or the link information in the file.

8. The method of claim 7, further comprising:
generating a request of link reference for an object;
transmitting either the keyword or the link information to a control module between the editor and a revision management tool, the keyword and the link information being for the object;
retrieving location information of the object body corresponding to either the keyword or the link information from the management table;
transmitting the location information of the object body to the editor; and
displaying the body of the object.

9. The method of claim 7, further comprising:
generating an update request for the management table;
learning an object body of the file;
creating either the keyword or the link information, the keyword and the link information being for the object body;
registering either the keyword or the link information in the management table; and
embedding either the keyword or the link information into the file.

10. The method of claim 7, further comprising:
generating a registration request for a file
deleting either the keyword or the link information embedded into the file, from the file; and
registering the file thus obtained in the revision management tool.

11. The method of claim 7, further comprising:
generating an acquisition request for a file;
acquiring the file and a management table corresponding to the file from the revision management tool in a case where the editor generates a request for simultaneously acquiring the management table;
acquiring either keyword or the link information with reference to the management table; and
embedding either the keyword or the link information into the file.

12. The method of claim 7, further comprising:
generating a request for build processing of a file
updating the management table;
checking whether a body of the object in the file exists;
checking whether a body of the object is duplicated; and
counting portions of calling the object.

13. A computer program to be executed by a computer for controlling information processing, comprising:
instructions for an editor to generate a reference creation request for creating a dependency relation between objects in files;
instructions for a control module between the editor and a revision management tool to acquire, from a management table storage, either a keyword or link information to an object body, the keyword and the link information being for the object in the file received from the editor;
instructions for the control module to return either the keyword or the link information to the editor; and
instructions for the editor to embed either the keyword or the link information into the file.

14. The computer program of claim 13, further comprising:
instructions for the editor to generate a request of link reference for an object;
instructions for the editor to transmit either the keyword or the link information to the control module, the keyword and the link information being for the object;
instructions for the control module to retrieve, from the management table, location information of the object body corresponding to either the keyword or the link information;
instructions for the control module to transmit the location information of the object body to the editor; and
instructions for the editor to display the body of the object.

15. The computer program of claim 13, further comprising:
instructions for the editor to generate an update request for a management table;
instructions for the control module to learn an object body in the file;
instructions for the control module to create either the keyword for or the link information, the keyword and the link information being for the object body;
instructions for the control module to register either the keyword or the link information in the management table; and
instructions for the editor to embed either the keyword or the link information into the file.

16. The computer program of claim 13, further comprising:
instructions for the editor to generate a registration request for a file;
instructions for the control module to delete, from the file, either the keyword or the link information embedded into the file; and,
instructions for the control module to register the file thus obtained in the revision management tool.

17. The computer program of claim 13, further comprising:
instructions for the editor to generate an acquisition request for a file;
instructions for the control module to acquire, from the revision management tool, the file and a management table corresponding to the file in a case where the editor generates a request for simultaneously acquiring the management table;
instructions for the control module to acquire either the keyword or the link information with reference to the management table; and
instructions for the editor to embed either the keyword or the link information into the file.

18. The computer program of claim 13, further comprising:
instructions for the editor to generate a request for build processing of a file;
instructions for the control module to update the management table;
instructions for the control module to check whether a body of the object in the file exists;
instructions for the control module to check whether a body of the object is duplicated; and
instructions for the control module to count portions of calling the object.
